(19) Europäisches Patentamt
European Patent Office
Office européen des brevets

(11) **EP 3 877 483 B1**

(12) # FASCICULE DE BREVET EUROPEEN

(45) Date de publication et mention de la délivrance du brevet:
**07.01.2026 Bulletin 2026/02**

(21) Numéro de dépôt: **19820822.5**

(22) Date de dépôt: **04.11.2019**

(51) Classification Internationale des Brevets (IPC):
***C09K 8/588*** $^{(2006.01)}$ ***C08F 2/32*** $^{(2006.01)}$

(52) Classification Coopérative des Brevets (CPC):
(C-Sets disponibles)
**C09K 8/588; C08F 2/32; C08F 290/046** (Cont.)

(86) Numéro de dépôt international:
**PCT/FR2019/052607**

(87) Numéro de publication internationale:
**WO 2020/094961 (14.05.2020 Gazette 2020/20)**

(54) **PROCEDE DE RECUPERATION ASSISTEE DE PETROLE PAR INJECTION D'UNE COMPOSITION AQUEUSE POLYMERIQUE**

VERFAHREN ZUR VERBESSERTEN ÖLRÜCKGEWINNUNG DURCH EINSPRITZEN EINER WÄSSRIGEN POLYMERZUSAMMENSETZUNG

METHOD FOR ENHANCED OIL RECOVERY BY MEANS OF INJECTION OF AN AQUEOUS POLYMER COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.11.2018 FR 1860203**

(43) Date de publication de la demande:
**15.09.2021 Bulletin 2021/37**

(73) Titulaire: **SNF Group**
**42160 Andrézieux-Bouthéon (FR)**

(72) Inventeurs:
- **FAVERO, Cédrick**
  **42160 Andrezieux Boutheon (FR)**
- **BRAUN, Olivier**
  **42160 Andrezieux Boutheon (FR)**
- **LEBLANC, Thierry**
  **42160 Andrezieux Boutheon (FR)**

(74) Mandataire: **Ipsilon**
**Le Contemporain**
**50 Chemin de la Bruyère**
**69574 Dardilly Cedex (FR)**

(56) Documents cités:
**WO-A1-02/055607** **WO-A1-2018/172682**
**WO-A1-95/26455**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

**(Cont. page suivante)**

(52) Classification Coopérative des Brevets (CPC):
(Cont.)

C-Sets
**C08F 290/046, C08F 220/56, C08F 220/585**

## Description

## DOMAINE DE L'INVENTION

La présente invention concerne le domaine technique de la récupération assistée du pétrole dans un gisement. Plus précisément, la présente invention a pour objet un procédé amélioré de récupération assistée du pétrole par balayage d'une formation souterraine grâce à l'introduction dans le gisement d'un fluide d'injection comprenant au moins un polymère hydrosoluble à macromonomères à LCST. L'invention a également pour objet un fluide d'injection comprenant ledit polymère.

## ETAT ANTERIEUR DE LA TECHNIQUE

La plupart des champs de pétrole actuellement exploités sont devenus matures et ont, de fait, amorcé le déclin de leur production ou sont sur le point de le faire. Le taux de récupération de ces champs est actuellement de l'ordre de 15 à 35% en moyenne par rapport à la quantité initiale de pétrole. Ils offrent donc un potentiel de production encore considérable.

De manière générale, la récupération du pétrole brut contenu dans les gisements s'effectue en plusieurs temps.

La production résulte d'abord de l'énergie naturelle des fluides et de la roche qui se décompriment. A l'issue de cette phase de déplétion, la quantité d'huile récupérée en surface représente en moyenne quelques 5 à 15% de la réserve initiale. Il est donc nécessaire dans un deuxième temps d'employer des techniques visant à accroître le rendement de récupération en maintenant la pression du champ.

Pour cela, la méthode la plus fréquemment mise en œuvre consiste à injecter de l'eau dans le gisement par le biais de puits injecteurs dédiés à cette fin. On parle alors de récupération secondaire. Cette deuxième phase s'arrête lorsque le rapport eau/huile est trop important, c'est-à-dire lorsque la quantité en eau dans le mélange produit par les puits producteurs est trop importante. Cette récupération secondaire permet ainsi d'obtenir un taux de récupération additionnel de l'ordre de 10 à 20%.

Les autres techniques utilisables sont regroupées sous le nom de récupération assistée du pétrole (RAP ou EOR acronyme anglais de « Enhanced Oil Recovery »). Leur but est de récupérer entre 10 et 35% d'huile additionnelle par rapport à la quantité initiale d'huile. Sous le terme de récupération assistée du pétrole sont connues diverses techniques thermiques, ou non telles que les techniques dites électrique, miscible, vapeur, ou encore chimique de « récupération améliorée du pétrole » restant en place (voir « Oil & gas science and technology » - revue IFP, vol 63 (2008) n°1, pp 9-19).

Par « pétrole », on désigne tout type d'huile, à savoir huile légère comme huile lourde, voire bitumineuse. Une huile résulte généralement de la transformation naturelle de matière organique et est composée d'un mélange d'hydrocarbures. Dans la description de l'art antérieur ou de l'invention, les termes « pétrole » et « huile » sont utilisés pour désigner la même matière.

La présente invention concerne plus précisément la récupération assistée du pétrole par voie chimique impliquant l'injection, dans une formation souterraine, d'un fluide d'injection aqueux comprenant au moins un polymère hydrosoluble, ledit fluide étant apte à balayer la formation souterraine, et donc à pousser le pétrole en dehors de la roche.

L'objectif de l'invention n'est pas de gélifier le polymère pour modifier la perméabilité de la roche et boucher les trous, technique désignée sous l'appellation « contrôle de profil » ou colmatage des voies d'eau.

L'objectif de l'invention est de proposer une amélioration de l'efficacité du balayage dans un procédé de récupération assistée du pétrole par voie chimique grâce à l'amélioration du contrôle de mobilité.

On distingue les techniques de récupération assistée du pétrole par balayage (EOR pour Enhanced Oil Recovery) des opérations de stimulation d'un réservoir. Ces dernières sont caractérisées par des injections limitées en volume de solution de polymère afin de créer un phénomène localisé dans le réservoir. Pour la conformance, il s'agit d'un bouchage des zones de fortes perméabilités à partir d'un puits injecteur d'eau, alors que pour le « water shutt off » il s'agit d'un bouchage de conduit par injection directe dans un puits producteur de pétrole. Les injections sont généralement faites soit à partir d'un puits injecteur, soit à partir d'un puits producteur sur des durées assez faibles de quelques jours et généralement inférieures à un mois, et avec des volumes de composition injectée représentant moins de 5% du volume poreux du réservoir. Le volume poreux correspond au volume non occupé par la roche dans le réservoir qui est une zone perméable.

A l'opposé, les techniques de récupération assistée du pétrole par balayage (EOR) utilisant des polymères impliquent une injection continue et prolongée de solution de polymère pour balayer le réservoir d'un puits injecteur jusqu'à un puits producteur. Le but n'est pas de traiter une zone du réservoir mais de balayer sa totalité afin de récupérer un maximum d'huile. Pour cela, il est nécessaire d'injecter un volume de solution aqueuse beaucoup plus important compris généralement entre 30% et 500%, voire plus, du volume poreux. Au niveau du ou des puits producteurs, on récupère un mélange aqueux, huileux et parfois gazeux.

Dans toutes ces techniques, l'efficacité du balayage par injection d'eau est généralement améliorée par

l'addition de polymères hydrosolubles. Les bénéfices attendus et prouvés de l'utilisation de ces polymères, au travers de leur capacité à viscosifier les fluides d'injection, sont l'amélioration du balayage et du contrôle de la mobilité dans le champ afin de récupérer un maximum d'huile rapidement et efficacement.

Il est connu de l'homme du métier que les polymères hydrosolubles synthétiques, et en particulier à base d'acrylamide, sont des polymères très avantageux pour augmenter la viscosité des solutions aqueuses et sont de fait, majoritairement utilisés en récupération assistée du pétrole. Récemment de nombreuses solutions ont été proposées pour améliorer ces procédés, et notamment dans le développement de polymères de nouvelles générations.

Les documents WO 95/26455 et WO 2018/172682 décrivent des procédés relatifs à la récupération du pétrole. Le document WO 02/055607 décrit une dispersion contenant un polymère à LCST et son utilisation dans la cosmétique.

Le document WO 2014/166858 décrit un procédé de récupération assistée du pétrole utilisant des copolymères ayant une proportion iso molaire d'ATBS et de NVP offrant une stabilité à la température améliorée. Le document US 2013/108173 décrit l'utilisation de copolymères à base d'ACMO ayant une très bonne résistance à la température et à la salinité. Le document WO 20131/08174 décrit des polymères spécifiques ayant une très bonne résistance au Fer.

Contrairement aux documents précités, le document WO 2016/162532 ne décrit pas un procédé de récupération assistée du pétrole par balayage mais un procédé de déviation d'une formation souterraine au moyen de polymère capable de former in situ des gels de déviation temporaires. Ces polymères sont obtenus à partir de macromonomères à LCST (température critique inférieure de démixtion, de l'acronyme anglais « Lower Critical Solution Température ») qui permettent aux polymères de gélifier in situ lorsque le polymère rencontre des conditions de température suffisante.

La technologie LCST est largement appliquée aux polymères pour leur conférer une capacité à se transformer en gels physiques pour obstruer ou boucher des conduits, canalisations ou tous autres matériaux poreux. Cette technologie est notamment utilisée en construction.

La technologie LCST appliquée aux polymères utilisés dans l'extraction d'huile permet d'obstruer temporairement ou définitivement des zones de formations souterraines grâce à la gélification du fluide d'injection contenant un polymère thermosensible qui, sous l'action de la chaleur, va se transformer en gel.

En ce qui concerne la récupération assistée du pétrole par balayage, même si des progrès importants ont été réalisés ces dernières années, les polymères hydrosolubles n'offrent pas encore une efficacité de balayage et un contrôle de mobilité optimum, particulièrement lorsqu'ils sont soumis à des conditions difficiles. C'est typiquement le cas lorsque les polymères rencontrent des conditions de haute température et/ou de haute salinité. Il reste alors dans les formations traitées une quantité importante d'huile résiduelle, aujourd'hui difficile à récupérer.

Le problème que se propose de résoudre la présente invention est d'améliorer l'efficacité du balayage et le contrôle de mobilité apportés par des polymères hydrosolubles dans les procédés de récupération assistée du pétrole par balayage de la formation souterraine.

## EXPOSE DE L'INVENTION

La Demanderesse a découvert de manière surprenante que cela était possible grâce à l'utilisation de copolymère hydrosoluble comprenant une dose homéopathique de macromonomères à LCST.

On entend par « dose homéopathique » une quantité extrêmement faible en regard des autres constituants du copolymère hydrosoluble.

C'est grâce à un dosage homéopathique de ce dernier qu'il est possible d'obtenir des copolymères hydrosolubles présentant un profil rhéologique tel, que les fluides d'injection les contenant offrent un balayage et un contrôle de mobilité optimisés, particulièrement à hautes températures (thermosensible) et/ou haute salinité (sensible au(x) sel(s)).

Plus précisément, la présente invention concerne un procédé de récupération assistée du pétrole par balayage d'une formation souterraine comprenant les étapes suivantes :

- préparer un fluide d'injection aqueux comprenant au moins un copolymère hydrosoluble,
- injecter le fluide d'injection dans une formation souterraine,
- balayer la formation souterraine à l'aide du fluide injecté,
- récupérer un mélange aqueux et huileux et/ou gazeux,

le copolymère hydrosoluble contenant des unités monomériques issues :

a) d'au moins un monomère hydrosoluble portant au moins une fonction insaturée ; et
b) d'au moins un macromonomère à LCST en une quantité supérieure à $10^{-5}$ mol% et inférieure à $10^{-1}$ mol% par rapport au nombre total de moles de monomère(s) hydrosoluble(s) et de macromonomère(s) à LCST.

Le macromonomère à LCST a un poids moléculaire moyen en poids compris entre 500 g/mol et 200 000 g/mol.

Le macromonomère à LCST est obtenu à partir d'un oligomère à LCST fabriqué à partir d'au moins un monomère

à LCST et d'au moins un monomère hydrosoluble choisi parmi les monomères non-ioniques, les monomères anioniques, les monomères cationiques et les monomères zwittérioniques.

Le monomère à LCST est choisi parmi le N-isopropylacrylamide ; le N,N-diméthylacrylamide ; l'acryloyl morpholine ; le N,N-diéthyle acrylamide ; le N-tert butyl acrylamide ; la N-vinyl caprolactame ; et la diacétone acrylamide.

Pour plus de clarté, le « copolymère hydrosoluble » désigne le copolymère hydrosoluble mis en œuvre dans la présente invention. D'autre part, « monomère(s) hydrosoluble(s) » et « macromonomère(s) » désignent respectivement « au moins un monomère hydrosoluble » et « au moins un macromonomère ».

Le copolymère hydrosoluble est un polymère d'au moins un monomère hydrosoluble et au moins un macromonomère à LCST. Il est donc obtenu à partir d'au moins un monomère hydrosoluble et d'au moins un macromonomère à LCST. Ainsi, il contient des unités monomériques issues des monomère(s) et macromonomère(s) mentionnés. En d'autres termes, le copolymère hydrosoluble est un copolymère d'au moins un monomère hydrosoluble portant au moins une fonction insaturée susceptible d'être polymérisée pour former un squelette hydrosoluble et d'au moins un macromonomère à LCST.

Par « copolymère hydrosoluble », on désigne un copolymère permettant d'obtenir une solution aqueuse lorsqu'il est dissout sous agitation à 25°C et avec une concentration de 50 $g.L^{-1}$ dans l'eau.

Comme défini par l'IUPAC, un macromonomère est un polymère ou un oligomère portant un groupe terminal qui agit comme un monomère, ainsi, chaque polymère ou oligomère correspond à une unité monomère dans la chaine du polymère final.

Selon un mode de réalisation avantageux, le pourcentage molaire de motifs (unités monomériques) issus de macromonomères à LCST dans le copolymère est supérieur à $10^{-4}$ mol% par rapport au nombre total de moles d'unités monomériques de monomères et de macromonomères à LCST, préférentiellement supérieur à $10^{-3}$ mol%, encore plus préférentiellement supérieur à $5.10^{-3}$ mol%. Le pourcentage molaire de motifs issus de macromonomères à LCST dans le copolymère est préférentiellement inférieur à $9.10^{-2}$ mol% par rapport au nombre total de moles de monomères et de macromonomères à LCST, préférentiellement inférieur à $8.10^{-2}$ mol%, plus préférentiellement inférieur à $6.10^{-2}$ mol%, encore plus préférentiellement inférieur à $5.10^{-2}$ mol%, encore plus préférentiellement inférieur à $4.10^{-2}$ mol%.

De manière générale, la quantité d'unités monomériques d'un monomère (monomère ou macromonomère) correspond à la quantité de ce monomère mise en œuvre dans la préparation du polymère. Cette définition est applicable pour la préparation du copolymère hydrosoluble ou du macromonomère et donc de l'oligomère (voir ci-après). L'invention concerne également un fluide d'injection destiné à être utilisé dans un procédé de récupération assistée du pétrole par balayage comprenant un copolymère hydrosoluble ayant des unités monomériques issues :

a) d'au moins un monomère hydrosoluble portant au moins une fonction insaturée ; et
b) d'au moins un macromonomère à LCST en une quantité supérieure à $10^{-5}$ mol% et inférieure à $10^{-1}$ mol% par rapport au nombre total de moles de monomères hydrosolubles et de macromonomères à LCST.

Dans le fluide d'injection :

- le macromonomère à LCST a un poids moléculaire moyen en poids compris entre 500 g/mol et 200 000 g/mol,
- le macromonomère à LCST est obtenu à partir d'un oligomère à LCST fabriqué à partir d'au moins un monomère à LCST et d'au moins un monomère hydrosoluble choisi parmi les monomères non-ioniques, les monomères anioniques, les monomères cationiques et les monomères zwittérioniques,
- le monomère à LCST est choisi parmi le N-isopropylacrylamide ; le N,N-diméthylacrylamide ; l'acryloyl morpholine ; le N,N-diéthyle acrylamide ; le N-tert butyl acrylamide ; la N-vinyl caprolactame ; et la diacétone acrylamide.

*Le macromonomère à LCST et sa synthèse*

Eu égard à la présence en une quantité extrêmement faible de motifs issus de macromonomère à LCST, le copolymère mis en œuvre a le double avantage de ne pas se transformer en gel dans la formation souterraine, et de donner au fluide d'injection le contenant, des propriétés améliorées de balayage et de contrôle de mobilité.

Selon les connaissances générales de l'homme du métier, les groupes à LCST correspondent à des groupes dont la solubilité dans l'eau pour une concentration déterminée, est modifiée au-delà d'une certaine température et en fonction de la salinité. Il s'agit de groupes présentant une température de transition par chauffage définissant leur manque d'affinité avec le milieu solvant. Le manque d'affinité avec le solvant se traduit par une opacification ou une perte de transparence.

La température de transition minimale est appelée « LCST » (température critique inférieure de démixtion, de l'acronyme anglais « Lower Critical Solution Temperature »). Pour chaque concentration de groupe à LCST, une température de transition par chauffage est observée. Elle est supérieure à la LCST qui est le point minimum de la courbe. En dessous de cette température, le copolymère est soluble dans l'eau, au-dessus de cette température, le

copolymère perd sa solubilité dans l'eau.

D'une manière usuelle, la mesure de la LCST peut se faire visuellement : on détermine la température à laquelle apparaît le manque d'affinité avec le solvant, c'est-à-dire le point de trouble. Le point de trouble correspond à l'opacification de la solution ou perte de transparence.

La LCST peut aussi être déterminée selon le type de transition de phase par exemple par DSC (calorimétrie différentielle à balayage, de l'acronyme anglais « Differential scanning calorimetry »), par une mesure de transmittance ou par une mesure de viscosité.

De préférence, la LCST est déterminée par détermination du point de trouble par transmittance selon le protocole suivant.

La température de transition est mesurée pour un composé à LCST pour une solution ayant une concentration massique dans l'eau déionisée de 1% en poids dudit composé. Le point de trouble correspond à la température à laquelle la solution présente une transmittance égale à 85% des rayons lumineux ayant une longueur d'onde comprise entre 400 et 800 nm.

En d'autres termes, la température à laquelle la solution présente une transmittance égale à 85% correspond à la température de transition minimale LCST du composé, en l'occurrence du macromonomère à LCST.

D'une manière générale, une composition transparente présente une valeur de transmittance maximum de la lumière, quelle que soit la longueur d'onde comprise entre 400 et 800 nm, à travers un échantillon de 1 cm d'épaisseur, d'au moins 85%, de préférence d'au moins 90%. C'est la raison pour laquelle, le point de trouble correspond à une transmittance de 85%.

De manière générale, le macromonomère à LCST est obtenu par synthèse d'un oligomère à LCST possédant un bout fonctionnel, puis par greffage sur ce bout fonctionnel d'un groupement éthylénique.

On peut ainsi citer à titre d'exemple, la synthèse du macromonomère à LCST à partir d'un oligomère à LCST de taille et de fonctionnalité contrôlées, effectuée à l'aide d'un amorceur radicalaire ou ionique possédant la fonction chimique recherchée, et/ou en introduisant un agent de transfert substitué par le groupement chimique désiré et/ou par polycondensation.

Les monomères à LCST susceptibles d'être utilisés pour fabriquer l'oligomère à LCST, qui sert à l'obtention du macromonomères à LCST, sont choisis parmi le N-isopropylacrylamide ; le N,N-diméthylacrylamide ; l'acryloyl morpholine ; le N,N-diéthyle acrylamide; le N-tert butyl acrylamide ; la N-vinyl caprolactame ; et la diacétone acrylamide.

Dans le cadre de l'invention, l'oligomère à LCST comprend avantageusement entre 10 mol% et 100 mol% de monomère(s) comprenant un motif à LCST, de manière plus avantageuse entre 40 mol% et 100 mol% et de manière encore plus avantageuse entre 50 mol% et 100 mol% par rapport au nombre total de moles de monomères dans l'oligomère. Selon un mode de réalisation particulier, l'oligomère à LCST peut notamment comprendre 90 à 96 mol% de monomère(s) comprenant un motif à LCST.

En plus des monomères à LCST, les monomères hydrosolubles susceptibles d'être utilisés pour fabriquer l'oligomère à LCST sont choisis parmi les monomères non-ioniques, les monomères anioniques, les monomères cationiques et les monomères zwittérioniques. De manière préférentielle, ils sont choisis parmi les monomères non-ioniques et les monomères anioniques.

Dans le cadre de l'invention, l'oligomère à LCST comprend avantageusement entre 0 mol% et 90 mol% de ce(s) monomère(s) (non-ionique et/ou anionique et/ou cationique et/ou zwittérionique), de manière plus avantageuse entre 0 mol% et 60 mol% et de manière encore plus avantageuse entre 0 mol% et 50 mol% par rapport au nombre total de moles de monomères dans l'oligomère. Selon un mode de réalisation particulier, l'oligomère à LCST peut notamment comprendre 4 à 10 mol% de ce(s) monomère(s). Ces monomères peuvent être à caractère hydrophile ou hydrophobe.

Ainsi, l'oligomère à LCST, et donc le macromonomère à LCST, est obtenu à partir d'au moins un monomère à LCST et d'au moins un monomère hydrosoluble. Il contient donc des unités monomériques issues des monomère(s) et macromonomère(s) mentionnés.

Le monomère hydrosoluble peut être un monomère non-ionique pouvant notamment être choisi dans le groupe comprenant les monomères vinyliques solubles dans l'eau, et particulièrement l'acrylamide. Ainsi, l'oligomère à LCST peut comprend un monomère non-ionique avantageusement choisi dans le groupe comprenant l'acrylamide ; le méthacrylamide ; la N-vinylformamide ; et la N-vinylpyrrolidone.

Le monomère hydrosoluble peut également être un monomère anionique. Le ou les monomères anioniques pouvant être utilisés dans le cadre de l'invention peuvent être choisis dans un large groupe. Ces monomères peuvent présenter des fonctions acryliques, vinyliques, maléiques, fumariques, malonique, itaconique, allyliques et contenir un groupe carboxylate, phosphonate, phosphate, sulfate, sulfonate, ou un autre groupe à charge anionique. Le monomère anionique peut être sous forme acide ou bien sous forme de sel de métal alcalino-terreux ou de métal alcalin ou d'ammonium (avantageusement quaternaire). Des exemples de monomères convenables comprennent l'acide acrylique ; l'acide méthacrylique ; l'acide itaconique ; l'acide crotonique ; l'acide maléique ; l'acide fumarique ; les monomères de type acide fort présentant par exemple une fonction de type acide sulfonique ou acide phosphonique tels que l'acide 2-acrylamido 2-méthylpropane sulfonique, l'acide vinylsulfonique, l'acide vinylphosphonique, l'acide allylsulfonique, l'acide

allylphosphonique, l'acide styrène sulfonique ; et les sels hydrosolubles de ces monomères comme leurs sels de métaux alcalins, de métaux alcalino-terreux, ou d'ammonium (avantageusement quaternaire).

De manière optionnelle, l'oligomère à LCST peut comprendre au moins un monomère cationique.

Le monomère hydrosoluble peut optionnellement être un monomère cationique de type acrylamide, acrylique, vinylique, allylique ou maléique possédant une fonction amine ou ammonium quaternaire. On peut citer, en particulier et de façon

non limitative, l'acrylate de diméthylaminoéthyl (ADAME), et le méthacrylate de diméthylaminoéthyle (MADAME) quaternisés ou salifiés, le chlorure de diméthyldiallylammonium (DADMAC), le chlorure d'acrylamido propyltriméthyl ammonium (APTAC) et le chlorure de méthacrylamido propyltriméthyl ammonium (MAPTAC).

Des monomères à caractère hydrophobe peuvent également être utilisés, et choisis notamment parmi les monomères de type acrylamide, acrylique, vinylique, allylique ou maléique possédant une fonction hydrophobe pendante. Il peut notamment s'agir du monomère méthacrylate de butyle.

Selon un mode de réalisation préféré, l'oligomère à LCST est un polymère d'un monomère à LCST (de préférence le N-isopropylacrylamide), d'un monomère anionique (de préférence l'acide acrylique) et d'un monomère à caractère hydrophobe (de préférence le méthacrylate de butyle).

Ainsi, selon un autre mode de réalisation préféré, l'oligomère à LCST est un polymère d'un monomère à LCST (de préférence le N-isopropylacrylamide), d'un monomère cationique (de préférence MADAME.MeCl) et d'un monomère à caractère hydrophobe (de préférence le méthacrylate de butyle).

En ce qui concerne la synthèse du macromonomère à LCST, dans une première étape on peut citer la télomérisation, qui est un mode de synthèse d'oligomères à LSCT de faibles masses molaires (appelés télomères).

Selon l'invention, le macromonomère à LCST a un poids moléculaire compris entre 500 g/mol et 200 000 g/mol, préférentiellement compris entre 1 000 g/mol et 100 000 g/mol, plus préférentiellement compris entre 1 500 g/mol et 100 000 g/mol. Le poids moléculaire s'entend en poids moléculaire moyen en poids.

Les agents télogènes peuvent être choisis entre autres parmi les thiols, alcools, disulfures, dérivés phosphorés, borés et halogénés. Ils peuvent notamment permettre d'introduire des fonctions spécifiques à l'extrémité des chaînes télomères, par exemple des fonctions silanes, trialkoxysilanes, amines, époxy, hydroxyles, phosphonates, ou acides.

Une fois ces oligomères à LCST formés, dans une deuxième étape, une double-liaison vinylique (R1R2C=CR3-, R1, R2 et R3 étant indépendamment l'un de l'autre un atome d'hydrogène ou un groupe hydrocarboné ou non pouvant comprendre des hétéroatomes) peut être introduite à l'extrémité de la chaîne afin qu'ils servent de macromonomères à LCST pouvant être à leur tour polymérisés.

Selon un autre mode de synthèse un macromère à LCST est obtenu par polymérisation radicalaire contrôlée dite RAFT (transfert de chaîne réversible par addition-fragmentation, de l'anglais « reversible-addition fragmentation chain transfer ») de monomères à LCST en présence d'au moins un agent de réticulation. Le macromonomère ainsi obtenu est donc structuré et peut servir de cœur pour l'obtention de copolymères hydroslubles sous forme étoilée. L'agent de réticulation pouvant être choisi dans le groupe comprenant des monomères à insaturation polyéthylénique (ayant au minimum deux fonctions insaturées), comme par exemples les fonctions vinyliques, allyliques, acryliques et l'on peut citer par exemple le méthylène bis acrylamide (MBA).

Le macromonomère à LCST peut être obtenu par la même technique mais sans l'utilisation d'un agent de réticulation.

Les réactions pouvant être mises en œuvre pour les couplages sur monomères sont multiples : alkylation, estérification, amidation, transestérification ou transamidation.

Dans un mode de réalisation préféré, la préparation du macromonomère à LCST s'effectue par réaction par voie radicalaire entre un oligomère à LCST et un composé contenant une double liaison, la double liaison étant toujours présente après ladite réaction par voie radicalaire. De manière avantageuse, l'oligomère à LCST présente la caractéristique d'avoir un atome d'azote ou d'oxygène à son extrémité, comme par exemple une fonction alcool ou amine, qui est fonctionnalisée via le composé contenant une double liaison. Ce composé contenant une double liaison est choisi de préférence parmi le chlorure d'acryloyle, l'acide acrylique, le chlorure de méthacryloyle, l'acide méthacrylique, l'anhydride maléique, l'anhydride méthacrylique, les isocyanates aliphatiques insaturés, le chlorure d'allyle, le bromure d'allyle, l'acrylate de glycidyle, et le méthacrylate de glycidyle.

Selon un mode de réalisation particulier, le macromonomère à LCST peut être de formule (I) :

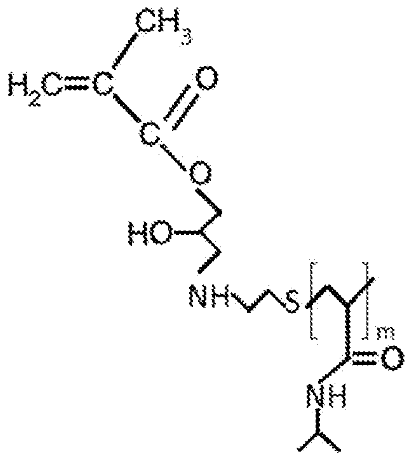

(I)

Dans laquelle :
m est un nombre entier compris avantageusement entre 2 et 40.

De manière générale, les groupes à LCST du copolymère hydrosoluble ont une température de transition par chauffage de 0°C à 180°C pour une concentration massique dans l'eau déionisée de 1% en poids desdits groupes à LCST, préférentiellement comprise entre 0°C et 100°C, encore plus préférentiellement comprise entre 10°C et 60°C.

*Copolymère hydrosoluble et sa synthèse*

Selon un mode de réalisation de l'invention, le copolymère hydrosoluble peut être obtenu par copolymérisation d'au moins un type de monomère hydrosoluble portant au moins une fonction insaturée et d'au moins un macromonomère à LCST. Autrement dit, le ou les monomères hydrosolubles et les macromonomères à LCST sont polymérisés en même temps dans un réacteur. La chaîne polymérique se forme progressivement en présence des monomères hydrosolubles et de macromonomères à LCST.

Selon un autre mode de réalisation, un copolymère hydrosoluble (le squelette) est d'abord obtenu par polymérisation des monomères hydrosolubles, puis dans un second temps les oligomères à LCST sont greffés sur ledit copolymère. L'homme de métier connait les techniques permettant le greffage des macromonomères à LCST sur un copolymère. On peut citer par exemple le brevet WO 2014/047243 qui décrit cette technique.

Selon un troisième mode de réalisation, un copolymère hydrosoluble est obtenu en polymérisant les monomères hydrosolubles sur le macromonomère à LCST structuré obtenu en présence d'agent de réticulation par polymérisation radicalaire contrôlée (RAFT). Les copolymères ainsi obtenus sont donc sous forme d'étoile à cœur LCST.

L'invention ne se limite pas à ces méthodes d'obtention du copolymère.

Les monomères hydrosolubles portant au moins une fonction insaturée susceptibles d'être utilisés pour fabriquer le copolymère hydrosoluble sont de préférence choisis parmi les monomères non-ioniques, les monomères anioniques, les monomères cationiques et les monomères zwittérioniques. De manière préférentielle, ils sont choisis parmi les monomères non-ioniques et les monomères anioniques.

Le monomère hydrosoluble peut être un monomère non-ionique pouvant notamment être choisi dans le groupe comprenant les monomères vinyliques solubles dans l'eau, et particulièrement l'acrylamide ; le méthacrylamide ; la N-vinylformamide ; la N-vinylpyrrolidone. De manière avantageuse, le monomère non-ionique est l'acrylamide.

Le monomère hydrosoluble peut également être un monomère anionique. Le ou les monomères anioniques pouvant être utilisés dans le cadre de l'invention peuvent être choisis dans un large groupe. Ces monomères peuvent présenter des fonctions acryliques, vinyliques, maléiques, fumariques, malonique, itaconique, allyliques et contenir un groupe carboxylate, phosphonate, phosphate, sulfate, sulfonate, ou un autre groupe à charge anionique. Le monomère anionique peut être sous forme acide ou bien sous forme de sel de métal alcalino-terreux ou de métal alcalin ou d'ammonium. Des exemples de monomères sont l'acide acrylique ; l'acide méthacrylique ; l'acide itaconique ; l'acide crotonique ; l'acide maléique ; l'acide fumarique ; les monomères de type acide fort présentant par exemple une fonction de type acide sulfonique ou acide phosphonique tels que l'acide 2-acrylamido 2-methylpropane sulfonique, l'acide vinylsulfonique, l'acide vinylphosphonique, l'acide allylsulfonique, l'acide allylphosphonique, l'acide styrène sulfonique ; et les sels hydrosolubles de ces monomères comme leurs sels de métaux alcalins, de métaux alcalino-terreux, ou d'ammonium.

De manière optionnelle, le squelette du copolymère hydrosoluble peut comprendre au moins un monomère cationique.

Le monomère hydrosoluble peut optionnellement être un monomère cationique de type acrylamide, acrylique, vinylique, allylique ou maléique possédant une fonction amine ou ammonium (par exemple un ammonium quaternaire). On peut citer, en particulier et de façon non limitative, l'acrylate de diméthylaminoéthyl (ADAME), et le méthacrylate de diméthylaminoéthyle (MADAME) quaternisés ou salifiés, le chlorure de diméthyldiallylammonium (DADMAC), le chlorure d'acrylamido propyltriméthyl ammonium (APTAC) et le chlorure de méthacrylamido propyltriméthyl ammonium (MAPTAC).

Selon un mode de réalisation particulier, le copolymère hydrosoluble comprend avantageusement jusqu'à 99.99999 mol% de monomère(s) anionique(s), par rapport au nombre total de monomères. Le copolymère comprend avantageusement une quantité importante de monomère anionique de préférence supérieure à 30 mol%, préférentiellement supérieure à 50 mol%, encore plus préférentiellement supérieure à 70 mol%. Cette quantité sera d'autant plus importante que le copolymère rencontrera des conditions de température élevée et/ou de salinité élevée dans la formation souterraine.

Lorsque le copolymère hydrosoluble comprend au moins un monomère non ionique, celui-ci est préférentiellement présent entre 1 et 70 mol%, plus préférentiellement entre 20 et 50 mol%, par rapport au nombre total de monomères.

Lorsque le copolymère hydrosoluble comprend au moins un monomère cationique, celui-ci est préférentiellement présent dans une quantité inférieure à 5 mol%.

Le copolymère hydrosoluble pourra être obtenu par polymérisation radicalaire. Les techniques de polymérisation telles que la polymérisation radicalaire contrôlée dite RAFT (transfert de chaîne réversible par addition-fragmentation, de l'anglais « reversible-addition fragmentation chain transfer »), NMP (polymérisation en présence de nitroxydes, de l'anglais « Nitroxide Mediated Polymerization ») ou ATRP (polymérisation radicalaire par transfert d'atomes, de l'anglais « Atom Transfert Radical Polymerization »), peuvent être utilisées pour obtenir le copolymère hydrosoluble.

De manière générale, le copolymère ne nécessite pas de développement de procédé de polymérisation particulier. En effet, il peut être obtenu selon toutes les techniques de polymérisation bien connues par l'homme de métier. Il peut notamment s'agir de polymérisation en solution ; polymérisation en gel ; polymérisation par précipitation ; polymérisation en émulsion (aqueuse ou inverse) ; polymérisation en suspension ; polymérisation par extrusion réactive ; polymérisation eau dans eau ; ou de polymérisation micellaire.

La polymérisation est de préférence effectuée en émulsion inverse suivie ou pas par une étape de concentration, ou par voie gel.

Selon l'invention, le copolymère peut se présenter sous forme liquide, gel ou solide (poudre ou bille) lorsque sa préparation inclut une étape de séchage tel que le « spray drying » (séchage par pulvérisation), le séchage sur tambour, le séchage par rayonnement tel que le séchage micro-ondes, ou encore le séchage en lit fluidisé.

Selon l'invention, le copolymère hydrosoluble a un poids moléculaire avantageusement d'au moins 0,5 million de g/mol, préférentiellement entre 0,5 million et 40 millions g/mol, plus préférentiellement entre 5 millions et 30 millions g/mol. Le poids moléculaire s'entend en poids moléculaire moyen en poids.

Le poids moléculaire est déterminé par la viscosité intrinsèque du copolymère. La viscosité intrinsèque peut être mesurée par des méthodes connues de l'homme du métier et peut être calculée à partir des valeurs de viscosité réduite pour différentes concentrations en copolymère par méthode graphique consistant à relever les valeurs de viscosité réduite (axe des ordonnées) sur la concentration (axe des abscisses) et d'extrapoler la courbe jusqu'à concentration nulle. La valeur de viscosité intrinsèque est relevée sur l'axe des ordonnées ou en utilisant la méthode des moindres carrés. Le poids moléculaire peut alors être déterminé par l'équation de Mark-Houwink :

$$[\eta] = K\ M^{\alpha}$$

$[\eta]$ représente la viscosité intrinsèque du copolymère déterminée par la méthode de mesure de viscosité en solution,
K représente une constante empirique ($K = 3{,}73.10^{-4}$),
M représente le poids moléculaire du copolymère,
$\alpha$ représente le coefficient de Mark-Houwink ($\alpha = +0{,}66$),
K et $\alpha$ dépendent du système particulier copolymère-solvant.

Propriété du copolymère hydrosoluble

Le copolymère hydrosoluble présente, pour une concentration massique donnée en solution aqueuse, et au-delà d'une température critique donnée, des propriétés d'association.

Ces propriétés d'association par chauffage observées au-delà de la température de transition des chaines à LCST engendrent des points collants entre les chaînes principales et un ralentissement de la reptation de la chaîne.

Un ralentissement de la reptation des chaînes engendre en milieu poreux une augmentation de la réduction de

mobilité, ce qui est recherché en récupération assistée du pétrole par balayage (« polymer flooding »).

Dans le procédé selon l'invention, le balayage de la formation souterraine est opéré par injection du fluide d'injection aqueux contenant le copolymère hydrosoluble dans la formation. C'est le changement progressif jusqu'à la température de la formation souterraine qui permet l'association des chaînes polymériques. Elle est généralement comprise entre 20°C et 200°C.

L'effet associant du copolymère hydrosoluble pourra être adapté à la nature de la formation souterraine (température) notamment en fonction de la nature du macromonomère à LCST, de la quantité molaire en macromonomère à LCST, de la salinité et/ou du pH de l'eau utilisée pour préparer le fluide d'injection aqueux à injecter, ou encore de la concentration en copolymère.

Selon un mode de réalisation avantageux, le copolymère hydrosoluble présente une température d'association avantageusement comprise entre 25°C et 160°C, de préférence supérieure à 40°C (40°C < température ≤ 160°C), plus préférentiellement supérieure à 60°C (60°C < température ≤ 160°C), encore plus préférentiellement supérieure à 80°C (80°C < température ≤ 160°C), encore plus préférentiellement supérieure à 90°C (90°C < température ≤ 160°C).

De manière avantageuse, l'effet d'association se fait instantanément une fois que le fluide d'injection a atteint la température d'association du copolymère, après injection dans la formation souterraine à traiter.

*Procédé de récupération assistée du pétrole par balayage*

De manière surprenante, la Demanderesse a découvert que le copolymère hydrosoluble est particulièrement adapté à une utilisation dans les procédés de récupération assistée du pétrole par balayage d'une formation souterraine.

L'utilisation de macromonomères à LCST en une quantité extrêmement faible dans le copolymère permet d'avoir un effet technique particulier. Le copolymère hydrosoluble permet d'obtenir un profil rhéologique tout à fait inattendu et particulièrement efficace pour balayer la formation souterraine.

Comme évoqué précédemment, et sans être lié à une quelconque théorie, il semble que les propriétés d'association par chauffage observées au-delà de la température de transition des chaines à LCST engendrent des points collants entre les chaînes principales des copolymères selon l'invention et un ralentissement de la reptation de la chaîne.

Ce ralentissement de la reptation des chaînes engendre ainsi en milieu poreux une augmentation de la réduction de mobilité, et ainsi une meilleure efficacité de balayage de la formation souterraine.

Le copolymère hydrosoluble est particulièrement intéressant et efficace lorsque les conditions du champ sont difficiles, par exemple lorsque la température de la formation souterraine est élevée et/ou la salinité du fluide d'injection aqueux dans lequel se trouve le copolymère est élevée.

Dans un mode particulier de l'invention, le procédé comprend le traitement d'une formation souterraine ayant une température maximum comprise entre 25°C et 160°C, de préférence supérieure à 40°C, plus préférentiellement supérieure à 60°C, encore plus préférentiellement supérieure à 80°C, encore plus préférentiellement supérieure à 90°C.

La concentration en copolymère hydrosoluble dans le fluide d'injection aqueux est avantageusement comprise entre 50 et 50000 ppm en poids, préférentiellement entre 100 et 30000 ppm, plus préférentiellement entre 500 et 10000 ppm par rapport au poids du fluide d'injection.

L'eau ou la saumure utilisée pour la préparation du fluide d'injection peut être une eau de production. On entend par « eau de production » toutes les eaux salées ou non salées, saumures, eau de mer, eau d'aquifère qui sont issues d'un réservoir d'hydrocarbures. Cette eau de production peut être traitée préalablement à la préparation du fluide d'injection comme décrit dans la demande de brevet WO 2018/020175.

Dans un mode particulier de l'invention, le procédé comprend le traitement d'une formation souterraine avec une fluide d'injection aqueux comprenant plus de 5% en poids de sels, préférentiellement plus de 7%, encore plus préférentiellement plus de 10%.

Les copolymères hydrosolubles selon l'invention peuvent être associés avec des composés stabilisants. Les composés stabilisants (agents stabilisants) peuvent être des composés qui protègent convenablement les copolymères, par exemple contre la dégradation thermique, chimique et/ou mécanique. Des exemples d'agents stabilisants appropriés sont fournis dans la demande de brevet WO 2010/133258.

Les techniques SP (Surfactant Polymer) et ASP (Alkaline Surfactant Polymer) ou toute autre technique bien connue de l'homme du métier pourront être mises en œuvre avec le même principe selon l'invention.

De manière avantageuse, le fluide d'injection présente, au moment de son injection, une viscosité comprise entre 1 et 200 cps (centipoises) (mesures de viscosité à 20°C avec un viscosimètre Brookfield avec un module UL et à une vitesse de 6 tours par minute).

La mise en œuvre du copolymère hydrosoluble est avantageusement réalisée sur site, juste en amont de son injection dans le gisement. En général, tous les composants introduits dans l'eau ou la saumure pour constituer le fluide d'injection sont, le plus souvent additionnés sur une ligne de circulation de la solution aqueuse ou de la saumure.

Lorsque le copolymère hydrosoluble est sous forme de particules, il peut être dissous dans un milieu aqueux

dans un dispositif de dispersion. Un exemple de dispositif de dispersion est l'unité de tranchage de polymères (PSU) décrite dans le document US 8,186,871, qui permet la préparation d'une solution aqueuse concentrée en polymère.

Outre le copolymère hydrosoluble, le fluide d'injection peut également comprendre un ou plusieurs composés chimiques utiles à la récupération améliorée du pétrole et bien connus de l'homme de métier.

Parmi ces composés chimiques, on citera l'utilisation de base faible, forte ou super-forte, minérale ou organique pouvant saponifier le pétrole brut et former in-situ des espèces tensioactives solubilisantes du pétrole. A titre d'exemple, on trouve parmi ceux-ci le carbonate de sodium, la soude caustique, les composés borates et metaborates, les amines, les espèces polymériques basiques.

Une autre famille de composés largement injectée avec les polymères est celle des composés tensioactifs, souvent anioniques, zwiterrioniques, cationiques et parfois aussi non ioniques. Ces composés sont rarement injectés purs mais avec un co-tensioactif et un co-solvant pour améliorer leur compatibilité et leur efficacité dans le réservoir.

Un autre aspect de l'invention concerne un fluide d'injection comprenant le copolymère hydrosoluble tel que décrit précédemment. Le fluide d'injection comprend au moins un copolymère hydrosoluble dans les proportions précédemment décrites, et au moins de l'eau ou une saumure. Optionnellement, il comprend d'autres composants comme par exemple une base telle que décrite précédemment, un ou plusieurs tensioactifs tels que décrits précédemment, des co-solvants ou d'autres (co)polymères hydrosolubles.

L'invention et les avantages qui en découlent ressortiront mieux des exemples suivants donnés afin d'illustrer l'invention et non de manière limitative.

## EXEMPLES DE REALISATION DE L'INVENTION

<u>1/ Synthèse des télomères (ou oligomères à LCST)</u>

Pour fabriquer un Télomère appelé T1, le procédé suivant est effectué.

Dans un réacteur à double enveloppe :

- On charge une solution hydroalcoolique (410g), et les monomères N isopropylacrylamide (NIPAM, 113g, soit 1 mol), Butyl méthacrylate (7,9g, soit 0.055 mol) et l'acide acrylique (4,44g, soit 0.055 mol).
- On met le mélange sous agitation.
- On ajuste le pH du mélange entre 4.0 et 5.0 à l'aide d'une solution de NaOH à 40% en poids dans l'eau.
- On chauffe le mélange obtenu à 50°C.
- On désoxygène avec un barbotage d'azote pendant 40 minutes.
- On ajoute de l'aminoethanethiol HCl (2.5g).
- On ajoute du 2,2'-azobis(2-methylpropionamidine)dihydrochloride (0.22g) pour amorcer la télomérisation.
- Après une stabilisation de la température, on garde en agitation pendant 2 heures puis on refroidit à 25°C.

On obtient une solution visqueuse concentrée contenant 23% en poids d'un télomère de degré de polymérisation de 50 motifs monomériques (DPn 50). La LCST de ce télomère T1 a été estimée à 38°C selon la méthode précédemment décrite.

Pour fabriquer un Télomère appelé T2, le procédé suivant est effectué.

Dans un réacteur à double enveloppe :

- Dans 445g d'une solution hydroalcoolique, on charge les monomères N isopropylacrylamide (NIPAM, 113g, soit 1 mol), butyl méthacrylate (4.44g, soit 0.031 mol) et méthacrylate de diméthylamino-éthyle chloromethylé (MADAME.MeCl, 2,16g, soit 0.01 mol).
- On met le mélange sous agitation.
- On ajuste le pH du mélange entre 4.0 et 5.0 à l'aide d'une solution de NaOH à 40% en poids dans l'eau.
- On chauffe le mélange obtenu à 50°C.
- On désoxygène avec un barbotage d'azote pendant 40 minutes.
- On ajoute de l'aminoethanethiol HCl (2.35g).
- On ajoute du 2,2'-azobis(2-methylpropionamidine)dihydrochloride (0.22g) pour amorcer la polymérisation.
- Après une stabilisation de la température, on garde en agitation pendant 2 heures puis on refroidit à 25°C.

On obtient une solution visqueuse concentrée contenant 21% en poids d'un télomère de degré de polymérisation de 50 motifs monomériques (DPn 50). La LCST de ce télomère T2 a été estimée à 32°C selon la méthode précédemment décrite.

Tableau 1 : Liste et compositions monomériques des télomères T1 et T2

| Télomère | Monomère à LCST (A), mol% | Monomère Hydrophile (B), mol% | Monomère Hydrophobe (C ), mol% | LCST Télomère (°C) |
|---|---|---|---|---|
| T1 | NIPAM, 90 | Acide acrylique, 5 | Butyl méthacrylate, 5 | 38 |
| T2 | NIPAM 96 | MADAME.MeCl, 1 | Butyl méthacrylate, 3 | 32 |

2/ Synthèse des macromonomères

Pour fabriquer un macromonomère appelé M1, le procédé suivant est effectué.

Dans un réacteur à double enveloppe :

- On charge 400g de solution de Télomère T1 (5581 g/mol) à 23% en poids dans l'eau.
- On met en agitation la solution.
- On ajuster le pH à 7.5 à l'aide d'une solution de NaOH 40% en poids dans l'eau.
- On refroidit à 5°C.
- A l'aide d'une burette on ajoute 3.0g de chlorure d'acryloyle en goutte à goutte.
- On ajuste continuellement le pH entre 7 et 9 à l'aide d'une solution de NaOH à 40% en poids dans l'eau.
- On maintient la température à 5°C durant toute la réaction.
- On laisse en agitation 2 heures après la fin de la réaction en continuant de vérifier le pH.

On obtient une solution visqueuse concentrée contenant 21.5% en poids de macromonomère à LCST M1 (5711 g/mol).

Le macromonomère M2 est fabriqué selon le même procédé, avec le télomère T2 (5740 g/mol). On obtient une solution visqueuse concentrée contenant 21.5% en poids de macromonomère à LCST M2 (5869 g/mol).

3/ Synthèse des polymères

A- Polymère sous forme de poudre obtenu par polymérisation gel

Pour fabriquer un polymère appelé P1 à partir du macromonomère M1, le procédé suivant est effectué.

173g d'acrylamide, 186g d'ATBS (acide 2-acrylamido 2-methylpropane sulfonique), 1.4g (soit 0.0075mol% par rapport au nombre de mol de monomère) de macromonomère à LCST M1, et 640g d'eau déionisée sont chargés dans un bécher pour préparer la solution aqueuse de monomères. Le pH de la solution de monomères est ajusté à 7 à l'aide d'une solution de NaOH 40% en poids dans l'eau. Elle est refroidie à une température de 5°C.

Les additifs suivants sont ensuite ajoutés :

- 30 ppm de Versenex 80 (agent complexant),
- 250 ppm d'AZDN (azo-bis-isobutyronitrile) (amorceur azoïque),
- 2 ppm de TBHP (terbutylhydroperoxide) (oxydant).

La solution est refroidie à 10°C, puis est transférée dans un réacteur calorifugé. La solution est désoxygénée à l'aide d'un gaz inerte pendant 15 minutes. 4 ppm de sels de Mohr sont ajoutés dans le but d'initier la réaction de polymérisation. Cette polymérisation se déroule dans des conditions adiabatiques jusqu'à atteindre la température de 85°C. Une fois la polymérisation terminée, le milieu réactionnel est laissé au repos 12 heures. Le gel obtenu est ensuite broyé, séché dans une étuve. On récupère une poudre blanche.

Le polymères P2 est fabriqué selon le même procédé avec le macromonomère M2. On obtient une poudre blanche.

En contre-exemple, les polymères P3 et P4 sont fabriqués selon le même procédé respectivement avec le macromonomère M1 et M2, à la différence près que la quantité de macromonomère est de $10^{-6}$ mol% par rapport au nombre total de monomères.

Egalement en contre-exemple, les polymères P5 et P6 sont fabriqués selon le même procédé respectivement avec le macromonomère M1 et M2, à la différence près que la quantité de macromonomère est de $2.10^{-1}$ mol% par rapport au nombre total de monomères.

B- Polymère sous forme d'émulsion inverse

Pour fabriquer une émulsion inverse appelé EM1, le procédé suivant est effectué.

146g (74.997 mol%) d'acrylamide, 157g (25 mol%) d'ATBS (acide 2-acrylamido-2-methylpropane sulfonique), 0.5g (0.003 mol%) de macromonomère à LCST M1 et 370g d'eau sont chargés dans un bécher pour préparer la solution aqueuse de monomères. Le pH de la solution de monomères est ajusté entre 5-6 à l'aide de NaOH.

Les additifs suivants sont ajoutés :

- 0.37g de Versenex 80 (agent complexant),
- 1.29g de TBHP (terbutylhydroperoxide) (oxydant).

295g de Exxsol D100 et 30g de Span 80 sont mélangés avant d'être transférés dans un réacteur ainsi que la phase aqueuse. Une émulsification du mélange biphasique est effectuée à l'aide d'un mixeur, ce mélange est désoxygéné à l'aide d'un gaz inerte puis il est refroidi à une température de 15°C.

La synthèse démarre avec l'ajout d'une solution de MBS (métabisulfite de sodium, 1g/l) à un débit de (1ml/min). On obtient ainsi une émulsion inverse de concentration en polymère de 30% en poids.

Une émulsion inverse EM2 est fabriquée selon le même procédé, avec le macromonomère à LCST M2. On obtient une émulsion inverse EM2 de concentration en polymère de 30% en poids.

En contre-exemple, les émulsions EM3 et EM4 sont fabriquées selon le même procédé respectivement avec le macromonomère M1 et M2, à la différence près que la quantité de macromonomère est de $10^{-6}$ mol% par rapport au nombre total de monomères.

Egalement en contre-exemple, les émulsions EM5 et EM6 sont fabriquées selon le même procédé respectivement avec le macromonomère M1 et M2, à la différence près que la quantité de macromonomère est de $2.10^{-1}$ mol% par rapport au nombre total de monomères.

4/ Evaluation du comportement des polymères en milieux poreux

a) Matériaux et méthodes

Plusieurs expériences de propagation en milieux poreux ont été effectuées pour évaluer le profil de propagation et la réduction de mobilité.

Les solutions de polymère sont préparées à partir des poudres P1 à P6 et des émulsions EM1 à EM6, dans une saumure 90 000 TDS (Total Dissolved Solids, 90 000 mg/L d'eau) de composition suivante : 86.23g de NaCl, 5g de $CaCl_2$, $2H_2O$ dans l'eau pour un poids total de 1000g. La concentration en polymère dans ces solutions est de 900 ppm.

La roche utilisée est un grès de type Bentheimer avec une perméabilité moyenne à l'eau autour de 1,5 Darcies. Les dimensions de nos milieux poreux sont de 1 pouce (soit 2,54 cm) de diamètre et de 3,5 pouces (soit 8,89 cm) de long. Les milieux poreux ont été séchés pendant une nuit dans un four avant d'être saturés sous vide dans de l'eau désoxygéné. Ces milieux poreux sont placés dans une cellule Hassler sous une pression de confinement de 50 bars. Ce montage est équipé d'un capteur de pression entre l'entrée et la sortie de la cellule.

b) Test

On injecte dans un premier temps la saumure à un débit de $12cm^3/h$ afin de réaliser un témoin. Après stabilisation du signal, on injecte la solution de polymère. Le capteur de pression va mesurer la pression relative au développement de la viscosité. La réduction de mobilité est déterminée après stabilisation du signal suivant la formule suivante :

$$Rm = \frac{\Delta P\ (solution\ de\ polymère)}{\Delta P\ (saumure)}$$

Une valeur élevée de Rm est recherchée car cela correspond à une bonne capacité que procure le polymère à balayer efficacement la roche.

c) Résultats

Lors de l'injection de la solution de polymère, on observe une montée en pression relative à l'augmentation de viscosité de la solution polymérique jusqu'à une stabilisation du signal. Lors des essais, la température est de 80 °C.

A- Polymère sous forme de poudre

Les polymères P1 à P2 ainsi que les contre-exemples P3 à P6 sont testés, et les résultats sont exposés dans le tableau 2.

Tableau 2 : Résultats des injections des solutions de polymères P1 à P6.

| Polymère | Macromonomère | Macromonomère (mol%) | Concentration en polymère (ppm) | Rm |
|---|---|---|---|---|
| P1 | M1 | $7.5\ 10^{-3}$ | 900 | 100 |
| P2 | M2 | $7.5\ 10^{-3}$ | 900 | 150 |
| P3 | M1 | $10^{-6}$ | 900 | 10 |
| P4 | M2 | $10^{-6}$ | 900 | 11 |
| P5 | M1 | $2.10^{-1}$ | 900 | NA |
| P6 | M2 | $2.10^{-1}$ | 900 | NA |

NA : Non Applicable. Le signal n'est pas stabilisé et donc aucune valeur de Rm ne peut être mesurée. En pratique, l'injection de telles solutions risquerait d'endommager la roche en bouchant les pores de la formation. Ces solutions ne sont donc pas du tout adaptées à la récupération assistée du pétrole par balayage.

On observe que les polymères P1 et P2 contenant une quantité appropriée de macromonomère à LCST ($7.5\ 10^{-3}$ mol%) offrent une réduction de mobilité bien supérieure à celle obtenue avec les polymères P3 et P4 contenant une quantité insuffisante de macromonomère ($10^{-6}$ mol%). Les polymères P5 et P6 contenant une quantité trop importante de macromonomère ($2.10^{-1}$ mol%) ne sont pas adaptés à la récupération assistée du pétrole par balayage.

B- Polymère sous forme d'émulsion inverse

Les émulsions EM1 à EM2 ainsi que les contre-exemples EM3 à EM6 sont testées, et les résultats sont exposés dans le tableau 3.

Tableau 3 : Résultats des injections des solutions de polymères des émulsions EM1 à EM6.

| Polymère | Macromonomère | Macromonomère (mol%) | Concentration en polymère (ppm) | Rm |
|---|---|---|---|---|
| EM1 | M1 | $7.5\ 10^{-3}$ | 900 | 80 |
| EM2 | M2 | $7.5\ 10^{-3}$ | 900 | 140 |
| EM3 | M1 | $10^{-6}$ | 900 | 9 |
| EM4 | M2 | $10^{-6}$ | 900 | 12 |
| EM5 | M1 | $2.10^{-1}$ | 900 | NA |
| EM6 | M2 | $2.10^{-1}$ | 900 | NA |

NA : Non Applicable. Le signal n'est pas stabilisé et donc aucune valeur de Rm ne peut être mesurée. En pratique, l'injection de telles solutions risquerait d'endommager la roche en bouchant les pores de la formation. Ces solutions ne sont donc pas du tout adaptées à la récupération assistée du pétrole par balayage.

On observe la même tendance que pour les polymères P1 à P6 sous forme de poudre. Plus exactement, les polymères des émulsions EM1 et EM2 contenant une quantité appropriée de macromonomère à LCST ($7.5\ 10^{-3}$ mol%) offrent une réduction de mobilité bien supérieure à celle obtenue avec les polymères des émulsions EM3 et EM4 contenant une quantité insuffisante de macromonomère ($10^{-6}$ mol%). Les polymères des émulsions EM5 et EM6 contenant une quantité trop importante de macromonomère ($2.10^{-1}$ mol%) ne sont pas adaptés à la récupération assistée du pétrole par balayage.

Les polymères selon l'invention offrent donc, grâce à la présence d'une quantité appropriée de macromonomères à LCST, des propriétés très intéressantes dans les procédés de récupération assistée du pétrole par balayage.

## Revendications

1. Procédé de récupération assistée du pétrole par balayage d'une formation souterraine comprenant les étapes suivantes :

    - préparer un fluide d'injection aqueux comprenant au moins un copolymère hydrosoluble,
    - injecter le fluide d'injection dans une formation souterraine,
    - balayer la formation souterraine à l'aide du fluide injecté,
    - récupérer un mélange aqueux et huileux et/ou gazeux,

    le copolymère hydrosoluble contenant des unités monomériques issues :

    a) d'au moins un monomère hydrosoluble portant au moins une fonction insaturée ; et
    b) d'au moins un macromonomère à LCST en une quantité supérieure à $10^{-5}$ mol% et inférieure à $10^{-1}$ mol% par rapport au nombre total de moles de monomère(s) hydrosoluble(s) et de macromonomère(s) à LCST,

    le macromonomère à LCST ayant un poids moléculaire moyen en poids compris entre 500 g/mol et 200 000 g/mol,
    le macromonomère à LCST étant obtenu à partir d'un oligomère à LCST fabriqué à partir d'au moins un monomère à LCST et d'au moins un monomère hydrosoluble choisi parmi les monomères non-ioniques, les monomères anioniques, les monomères cationiques et les monomères zwittérioniques,
    le monomère à LCST étant choisi parmi le N-isopropylacrylamide ; le N,N-diméthylacrylamide ; l'acryloyl morpholine ; le N,N-diéthyle acrylamide ; le N-tert butyl acrylamide ; la N-vinyl caprolactame ; et la diacétone acrylamide.

2. Procédé selon la revendication 1, ***caractérisé* en ce que** le pourcentage molaire de macromonomères à LCST dans le copolymère est supérieur à $10^{-4}$ mol% par rapport au nombre total de moles de monomères et de macromonomères à LCST, préférentiellement supérieur à $10^{-3}$ mol%, encore plus préférentiellement supérieur à $5.10^{-3}$ mol%.

3. Procédé selon l'une des revendications 1 ou 2, ***caractérisé* en ce que** le pourcentage molaire de macromonomères à LCST dans le copolymère est inférieur à $9.10^{-2}$ mol% par rapport au nombre total de moles de monomères et de macromonomères à LCST, préférentiellement inférieur à $8.10^{-2}$ mol%, plus préférentiellement inférieur à $6.10^{-2}$ mol%, encore plus préférentiellement inférieur à $4.10^{-2}$ mol%.

4. Procédé selon l'une des revendications précédentes, ***caractérisé* en ce que** le macromonomère à LCST est obtenu par réaction par voie radicalaire entre un oligomère à LCST et un composé contenant une double liaison, la double liaison étant toujours présente après ladite réaction par voie radicalaire.

5. Procédé selon la revendication 4, ***caractérisé* en ce que** l'oligomère à LCST présente un atome d'azote ou d'oxygène à son extrémité.

6. Procédé selon la revendication 4 ou 5, ***caractérisé* en ce que** le composé contenant une double liaison est choisi parmi le chlorure d'acryloyle, l'acide acrylique, le chlorure de méthacryloyle, l'acide méthacrylique, l'anhydride maléique, l'anhydride méthacrylique, les isocyanates aliphatiques insaturés, le chlorure d'allyle, le bromure d'allyle, l'acrylate de glycidyle, et le méthacrylate de glycidyle.

7. Procédé selon l'une des revendications 4 à 6, ***caractérisé* en ce que** l'oligomère à LCST comprend des monomères hydrosolubles choisis parmi les monomères non-ioniques et les monomères anioniques.

8. Procédé selon l'une des revendications précédentes, ***caractérisé* en ce que** le macromonomère à LCST est de formule (I) :

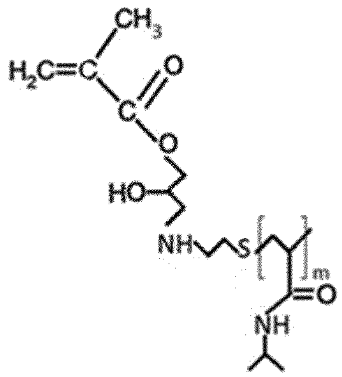

(I)

dans laquelle m est un nombre entier compris avantageusement entre 2 et 40.

**9.** Procédé selon l'une des revendications précédentes, ***caractérisé*** **en ce que** les monomères hydrosolubles du copolymère hydrosolubles portant au moins une fonction insaturée sont choisis parmi les monomères non-ioniques, les monomères anioniques, les monomères cationiques et les monomères zwittérioniques.

**10.** Procédé selon l'une des revendications 4 à 9, ***caractérisé*** **en ce que** le copolymère hydrosoluble comprend des monomères non-ioniques, et **en ce que** l'oligomère à LCST comprend des monomères non-ioniques,
ces monomères non-ioniques étant choisis dans le groupe comprenant l'acrylamide ; le méthacrylamide; la N-vinylformamide ; la N-vinylpyrrolidone.

**11.** Procédé selon l'une des revendications 4 à 10, ***caractérisé*** **en ce que** le copolymère hydrosoluble comprend des monomères anioniques, et **en ce que** l'oligomère à LCST comprend des monomères anioniques,
les monomères anioniques étant choisis parmi le groupe comprenant l'acide acrylique ; l'acide méthacrylique ; l'acide itaconique ; l'acide crotonique ; l'acide maléique ; l'acide fumarique ; l'acide 2-acrylamido 2-methylpropane sulfonique, l'acide vinylsulfonique, l'acide vinylphosphonique, l'acide allylsulfonique, l'acide allylphosphonique, l'acide styrène sulfonique ; et les sels hydrosolubles de ces monomères.

**12.** Procédé selon l'une des revendications précédentes, ***caractérisé*** **en ce que** le copolymère hydrosoluble présente une température d'association comprise entre 25°C et 160°C, de préférence supérieure à 60°C et inférieure ou égale à 160°C, plus préférentiellement supérieure à 90°C et inférieure ou égale à 160°C.

**13.** Procédé selon l'une des revendications précédentes, ***caractérisé*** **en ce que** le fluide d'injection aqueux comprend plus de 5% en poids de sels, préférentiellement plus de 7%, encore plus préférentiellement plus de 10%.

**14.** Fluide d'injection destiné à être utilisé dans un procédé de récupération assistée du pétrole par balayage comprenant un copolymère hydrosoluble contenant des unités monomériques issues :

a) d'au moins un monomère hydrosoluble portant au moins une fonction insaturée ; et
b) d'au moins un macromonomère à LCST en une quantité supérieure à $10^{-5}$ mol% et inférieure à $10^{-1}$ mol% par rapport au nombre total de moles de monomères hydrosolubles et de macromonomères à LCST,

le macromonomère à LCST ayant un poids moléculaire moyen en poids compris entre 500 g/mol et 200 000 g/mol,
le macromonomère à LCST étant obtenu à partir d'un oligomère à LCST fabriqué à partir d'au moins un monomère à LCST et d'au moins un monomère hydrosoluble choisi parmi les monomères non-ioniques, les monomères anioniques, les monomères cationiques et les monomères zwittérioniques,
le monomère à LCST étant choisi parmi le N-isopropylacrylamide ; le N,N-diméthylacrylamide ; l'acryloyl morpholine ; le N,N-diéthyle acrylamide ; le N-tert butyl acrylamide ; la N-vinyl caprolactame ; et la diacétone acrylamide.

## Patentansprüche

1. Verfahren zur unterstützten Rückgewinnung von Erdöl durch Spülen einer unterirdischen Formation, das folgende Schritte umfasst:

   - Herstellen eines wässrigen Injektionsfluids, das mindestens ein wasserlösliches Copolymer enthält,
   - Injektion des Injektionsfluids in eine unterirdische Formation,
   - Spülung der unterirdischen Formation mithilfe des Injektionsfluids,
   - Rückgewinnung eines wässrigen und öligen und/oder gasförmigen Gemisches,

   wobei das wasserlösliche Copolymer Monomereinheiten enthält, die aus folgenden Verbindungen stammen:

   a) aus mindestens einem wasserlöslichen Monomer mit mindestens einer ungesättigten Funktion; und;
   b) aus mindestens einem LCST-Makromonomer in einer Menge von mehr als $10^{-5}$ Mol-% und weniger als $10^{-1}$ Mol-%, bezogen auf die Gesamtmolzahl des/der wasserlöslichen Monomere(s) und des/der LCST-Makromonomere(s),

   wobei das LCST-Makromonomer ein gewichtsgemitteltes Molekulargewicht zwischen 500 g/mol und 200.000 g/mol aufweist,
   wobei das LCST-Makromonomer aus einem LCST-Oligomer erhalten wird, das aus mindestens einem LCST-Monomer und mindestens einem wasserlöslichen Monomer hergestellt wird, das aus nichtionischen Monomeren, anionischen Monomeren, kationischen Monomeren und zwitterionischen Monomeren ausgewählt ist,
   wobei das LCST-Monomer ausgewählt ist aus N-Isopropylacrylamid, N,N-Dimethylacrylamid, Acryloylmorpholin, N,N-Diethylacrylamid, N-tert-Butylacrylamid, N-Vinylcaprolactam und Diacetonacrylamid.

2. Verfahren nach Anspruch 1, **dadurch *gekennzeichnet,* dass** der Molprozentsatz an LCST-Makromonomeren im Copolymer über $10^{-4}$ Mol-% bezogen auf die Gesamtmolzahl an Monomeren und LCST-Makromonomeren liegt, vorzugsweise über $10^{-3}$ Mol-%, noch bevorzugter über $5.10^{-3}$ Mol-%.

3. Verfahren nach Anspruch 1 oder 2, **dadurch *gekennzeichnet,* dass** der Molprozentsatz der LCST-Makromonomere im Copolymer unter $9.10^{-2}$ Mol-% der Gesamtmolzahl der Monomere und LCST-Makromonomere liegt, vorzugsweise unter $8.10^{-2}$ Mol-%, bevorzugter unter $6.10^{-2}$ Mol-%, noch bevorzugter unter $4.10^{-2}$ Mol-%.

4. Verfahren nach einem der vorherigen Ansprüche, **dadurch *gekennzeichnet,* dass** das LCST-Makromonomer durch radikalische Reaktion einem LCST-Oligomer und einer Verbindung mit einer Doppelbindung erhalten wird, wobei die Doppelbindung nach der radikalischen Reaktion weiterhin vorhanden ist.

5. Verfahren nach Anspruch 4, **dadurch *gekennzeichnet,* dass** das LCST-Oligomer an seinem Ende ein Stickstoff- oder Sauerstoffatom aufweist.

6. Verfahren nach Anspruch 4 oder 5, **dadurch *gekennzeichnet,* dass** die Verbindung mit einer Doppelbindung aus Acryloylchlorid, Acrylsäure, Methacryloylchlorid, Methacrylsäure, Maleinsäureanhydrid, Methacrylsäure-anhydrid, ungesättigten aliphatischen Isocyanaten, Allylchlorid, Allylbromid, Glycidylacrylat und Glycidylmethacrylat ausgewählt ist.

7. Verfahren nach einem der Ansprüche 4 bis 6, **dadurch *gekennzeichnet,* dass** das LCST-Oligomer wasserlösliche Monomere umfasst, die aus nichtionischen Monomeren und anionischen Monomeren ausgewählt sind.

8. Verfahren nach einem der vorherigen Ansprüche, **dadurch *gekennzeichnet,* dass** das LCST-Makromonomer folgende Formel (1) hat:

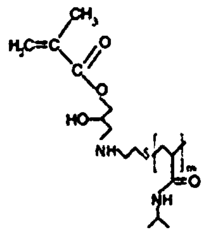

(I)

wobei m eine ganze Zahl ist, die vorzugsweise zwischen 2 und 40 liegt.

**9.** Verfahren nach einem der vorherigen Ansprüche, **dadurch *gekennzeichnet,* dass** die wasserlöslichen Monomere des wasserlöslichen Copolymers, die mindestens eine ungesättigte Funktion aufweisen, aus nichtionischen Monomeren, anionischen Monomeren, kationischen Monomeren und zwitterionischen Monomeren ausgewählt werden.

**10.** Verfahren nach einem der Ansprüche 4 bis 9, **dadurch *gekennzeichnet,* dass** das wasserlösliche Copolymer nichtionische Monomere umfasst, und dass das LCST-Oligomer nichtionische Monomere umfasst,
wobei diese nichtionischen Monomere aus der Gruppe ausgewählt werden, die Acrylamid, Methacrylamid, N-Vinylformamid und N-Vinylpyrrolidon umfasst.

**11.** Verfahren nach einem der Ansprüche 4 bis 10, **dadurch *gekennzeichnet,* dass** das wasserlösliche Copolymer anionische Monomere und das LCST-Oligomer anionische Monomere umfasst,
wobei die anionischen Monomere aus der Gruppe ausgewählt werden, die Acrylsäure, Methacrylsäure, Itaconsäure, Crotonsäure, Maleinsäure, Fumarsäure, 2-Acrylamido-2-methylpropansulfonsäure, Vinylsulfonsäure, Vinylphosphonsäure, Allylsulfonsäure, Allylphosphonsäure, Styrolsulfonsäure und die wasserlöslichen Salze dieser Monomere umfasst.

**12.** Verfahren nach einem der vorherigen Ansprüche, **dadurch *gekennzeichnet,* dass** das wasserlösliche Copolymer eine Assoziationstemperatur zwischen 25 °C und 160 °C aufweist, vorzugsweise über 60 °C und unter oder gleich 160 °C, noch bevorzugter über 90 °C und unter oder gleich 160 °C.

**13.** Verfahren nach einem der vorherigen Ansprüche, **dadurch *gekennzeichnet,* dass** das wässrige Injektionsfluid mehr als 5 Gew.-% Salze, vorzugsweise mehr als 7 Gew.-%, noch bevorzugter mehr als 10 Gew.-% enthält.

**14.** Injektionsfluid zur Verwendung in einem Verfahren zur unterstützten Erdölrückgewinnung durch Spülen, das ein wasserlösliches Copolymer, das Monomereinheiten enthält, die aus folgenden Verbindungen stammen:

a) aus mindestens einem wasserlöslichen Monomer mit mindestens einer ungesättigten Funktion; und
b) aus mindestens einem LCST-Makromonomer in einer Menge von mehr als $10^{-5}$ Mol-% und unter $10^{-1}$ Mol-% bezogen auf die Gesamtmolzahl der wasserlöslichen Monomere und LCST-Makromonomere,

wobei das LCST-Makromonomer ein gewichtsgemitteltes Molekular-gewicht zwischen 500 g/mol und 200.000 g/mol aufweist,
und das LCST-Makromonomer aus einem LCST-Oligomer erhalten wird, das aus mindestens einem LCST-Monomer und mindestens einem wasserlöslichen Monomer hergestellt wird, das aus nichtionischen Monomeren, anionischen Monomeren, kationischen Monomeren und zwitterionischen Monomeren ausgewählt ist,
wobei das LCST-Monomer ausgewählt ist aus N-Isopropylacrylamid, N,N-Dimethylacrylamid, Acryloylmorpholin, N,N-Diethylacrylamid, N-tert-Butylacrylamid, N-Vinylcaprolactam und Diacetonacrylamid.

## Claims

**1.** A process of enhanced oil recovery by sweeping an underground formation comprising the following steps:

- preparing an aqueous injection fluid comprising at least one water-soluble copolymer,
- injecting the injection fluid into an underground formation,
- sweeping the underground formation using the injected fluid,
- recovering an aqueous and oily and/or gaseous mixture,

the water-soluble copolymer containing monomeric units resulting from:

a) at least one water-soluble monomer bearing at least one unsaturated function; and
b) at least one LCST macromonomer in an amount greater than $10^{-5}$ mol% and less than $10^{-1}$ mol% based on the total number of moles of water-soluble monomer(s) and LCST macromonomer(s),

the LCST macromonomer having a weight-average molecular weight of between 500 g/mol and 200,000 g/mol,
the LCST macromonomer being obtained from an LCST oligomer made from at least one LCST monomer and at least one water-soluble monomer selected from nonionic monomers, anionic monomers, cationic monomers, and zwitterionic monomers,
the LCST monomer being selected from N-isopropylacrylamide; N,N-dimethylacrylamide; acryloyl morpholine; N,N-diethyl acrylamide; N-tert-butyl acrylamide; N-vinyl caprolactam; and diacetone acrylamide.

**2.** Process according to claim *1,* ***characterized*** **in that** the molar percentage of LCST macromonomers in the copolymer is greater than $10^{-4}$ mol% based on the total number of moles of monomers and LCST macromonomers, preferably greater than $10^{-3}$ mol%, even more preferably greater than $5.10^{-3}$ mol%.

**3.** Process according to claims 1 or 2, ***characterized*** **in that** the molar percentage of LCST macromonomers in the copolymer is less than $9.10^{-2}$ mol% based on the total number of moles of monomers and LCST macromonomers, preferably less than $8.10^{-2}$ mol%, more preferably less than $6.10^{-2}$ mol%, even more preferably less than $4.10^{-2}$ mol%.

**4.** Process according to one of the preceding claims, ***characterized*** **in that** the LCST macromonomer is obtained by radical reaction between an LCST oligomer and a compound containing a double bond, the double bond still being present after said radical reaction.

**5.** Process according to claim 4, ***characterized*** **in that** the LCST oligomer has a nitrogen or oxygen atom at its end.

**6.** Process according to claim 4 or 5, ***characterized*** **in that** the compound containing a double bond is selected from acryloyl chloride, acrylic acid, methacryloyl chloride, methacrylic acid, maleic anhydride, methacrylic anhydride, unsaturated aliphatic isocyanates, allyl chloride, allyl bromide, glycidyl acrylate, and glycidyl methacrylate.

**7.** Process according to one of claims 4 to 6, ***characterized*** **in that** the LCST oligomer comprises water-soluble monomers selected from non-ionic monomers and anionic monomers.

**8.** Process according to one of the preceding claims, ***characterized*** **in that** the LCST macromonomer is of formula (I):

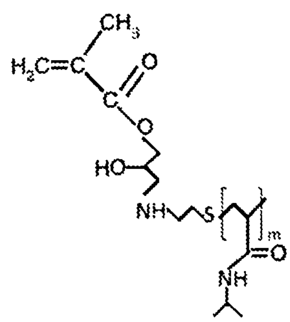

(I)

wherein m is an integer advantageously between 2 and 40.

**9.** Process according to one of the preceding claims, ***characterized* in that** the water-soluble monomers of the water-soluble copolymer bearing at least one unsaturated function are selected from non-ionic monomers, anionic monomers, cationic monomers, and zwitterionic monomers.

**10.** Process according to one of claims 4 to 9, ***characterized* in that** the water-soluble copolymer comprises non-ionic monomers, and **in that** the LCST oligomer comprises non-ionic monomers,
said non-ionic monomers being selected from the group comprising acrylamide; methacrylamide; N- vinylformamide; N-vinylpyrrolidone.

**11.** Process according to one of claims 4 to 10, ***characterized* in that** the water-soluble copolymer comprises anionic monomers, and **in that** the LCST oligomer comprises anionic monomers,
the anionic monomers being selected from the group comprising acrylic acid; methacrylic acid; itaconic acid; crotonic acid; maleic acid; fumaric acid; 2-acrylamido 2-methylpropanesulfonic acid, vinylsulfonic acid, vinylphosphonic acid, allylsulfonic acid, allylphosphonic acid, styrene sulfonic acid; and the water-soluble salts of these monomers.

**12.** Process according to one of the preceding claims, ***characterized* in that** the water-soluble copolymer has an association temperature between 25°C and 160°C, preferably greater than 60°C and less than or equal to 160°C, more preferably greater than 90°C and less than or equal to 160°C.

**13.** Process according to one of the preceding claims, ***characterized* in that** the aqueous injection fluid comprises more than 5% by weight of salts, preferably more than 7%, even more preferably more than 10%.

**14.** Injection fluid intended for use in a process for enhanced oil recovery process by sweeping comprising a water-soluble copolymer containing monomeric units derived from:

a) at least one water-soluble monomer bearing at least one unsaturated function; and
b) at least one LCST macromonomer in an amount greater than $10^{-5}$ mol% and less than $10^{-1}$ mol% based on the total number of moles of water-soluble monomers and LCST macromonomers,

the LCST macromonomer having a weight average molecular weight of between 500 g/mol and 200,000 g/mol,
the LCST macromonomer being obtained from an LCST oligomer made from at least one LCST monomer and at least one water-soluble monomer selected from nonionic monomers, anionic monomers, cationic monomers, and zwitterionic monomers,
the LCST monomer being selected from N-isopropylacrylamide; N,N-dimethylacrylamide; acryloyl morpholine; N,N-diethyl acrylamide; N-tert-butyl acrylamide; N-vinyl caprolactam; and diacetone acrylamide.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9526455 A
- WO 2018172682 A
- WO 02055607 A
- WO 2014166858 A
- US 2013108173 A
- WO 2013108174 A
- WO 2016162532 A
- WO 2014047243 A
- WO 2018020175 A
- WO 2010133258 A
- US 8186871 B


### Littérature non-brevet citée dans la description


- *Oil & gas science and technology*, 2008, vol. 63 (1), 9-19